# EUROPÄISCHE PATENTSCHRIFT

(11) **EP 0 397 642 B1**
(45) Veröffentlichungstag und Bekanntmachung des Hinweises auf die Patenterteilung: **09.02.1994**
(21) Anmeldenummer: 90890129.1
(22) Anmeldetag: 26.04.1990
(51) Int. Cl.: C12G 3/08

(54) **Verfahren zum Vermindern des Alkoholgehaltes alkoholischer Getränke**
Process to lower the alcohol content of alcoholic beverages
Procédé pour diminuer la teneur en alcool de boissons alcooliques

(30) Priorität: 09.05.1989 AT 1104/89
(43) Veröffentlichungstag der Anmeldung: 14.11.1990
(73) Patentinhaber: NATEX Prozesstechnologie GesmbH, A-2630 Ternitz (AT)
(72) Erfinder: Seidlitz, Helmut, Dipl.-Ing., A-2630 Ternitz (AT); Lack, Eduard, Dipl.-Ing., Dr., A-2630 Ternitz (AT); Lackner, Heinz, Dipl.-Ing., Dr., A-2630 Ternitz (AT)
(74) Vertreter: Haffner, Thomas M., Dr.

(56) Entgegenhaltungen:
- EP-A- 0 058 634
- DE-A- 1 195 258
- DE-A- 1 442 237
- DE-A- 3 819 527
- FR-A- 2 505 616

## Beschreibung

Die Erfindung bezieht sich auf ein Verfahren zum Vermindern des Alkoholgehaltes alkoholischer Getränke, bei welchem Aromastoffe mit flüssigem oder überkritischem CO₂ extrahiert werden, Alkohol destillativ abgetrennt wird und die extrahierten Aromastoffe dem Getränk mit vermindertem Alkoholgehalt zumindest teilweise wieder rückgeführt werden.

Verfahren der eingangs genannten Art sind beispielsweise der DE-OS 35 42 757 zu entnehmen. Bei dem vorbeschriebenen Verfahren wird insbesondere für die Herstellung von alkoholfreiem Wein zunächst durch Extraktion mit überkritischem CO₂ eine Aromafraktion gewonnen, in welcher auch Ethanol enthalten ist. Der Restwein wird anschließend einer Vakuumdestillation unterworfen, wobei neben der fast vollständigen Abtrennung des Ethanols aus dem Restwein noch eine Fraktion von durch die Extraktion nicht erfaßten schwerer extrahierbaren Aromastoffen gewonnen werden kann, welche am Ende zusammen mit dem Extrakt dem entalkoholisierten Restwein zum Erzeugen eines alkoholfreien Weines wieder zugesetzt werden kann.

Bei dieser vorbeschriebenen Verfahrensweise wird die gesamte Menge des Einsatzproduktes der Hochdruckextraktion unterworfen, wodurch aufwendige und groß dimensionierte Einrichtungen für die Hochdruckextraktion erforderlich werden. Bedingt durch den hohen Massenstrom im Hochdruckteil einer derartigen Anlage entstehen beachtliche Betriebs- und Betriebsmittelkosten und es sind naturgemäß auch höhere Mengen an CO₂ einzusetzen. Bei Hochdruckextraktion des gesamten Massenstromes vor einer Destillation besteht darüberhinaus die Gefahr eines instabilen Betriebsverhaltens auf Grund der Neigung zur Schaumbildung in der Grenzschicht im Extraktor.

Bei den das Bukett bildenden Geschmacks- und Aromastoffen eines alkoholischen Getränkes handelt es sich um eine große Zahl unterschiedlicher Substanzen, darunter höhere Alkohole, Ester, Aldehyde, Ketone, Lactone, Säuren u.dgl., deren Gesamtmenge im alkoholfreien Getränk, beispielsweise im Fall von Wein, etwa 0,5 bis 1 Promill des Volumens beträgt. Ein Teil dieser Geschmacks- und Aromastoffe ist leicht flüchtig, wobei die Siedepunkte teilweise über und teilweise unter dem Siedepunkt des Ethanols liegen. Bei einer Extraktion mit überkritischem Kohlendioxid werden neben Aromastoffen immer auch Ethanolanteile extrahiert und es besteht prinzipiell die Möglichkeit, die Selektivität der Extraktion durch Beeinflussung der Extraktionsbedingungen zu beeinflussen. Eine Variation des Massenstromverhältnisses der Extaktionskolonne ist allerdings nur in beschränktem Umfang möglich und ist insbesondere im Hinblick auf die Möglichkeit eines instabilen Betriebsverhaltens und die Schaumbildung nur in begrenztem Umfang durchführbar.

Die Erfindung zielt nun darauf ab, ein Verfahren der eingangs genannten Art zu schaffen, welches im Vergleich zu dem vorbekannten Verfahren wesentlich kostengünstiger und einfacher durchgeführt werden kann und welches bei wesentlich geringerem apparativen Aufwand ein Endprodukt ergibt, in welchem der überwiegende Anteil der ursprünglich enthaltenen Aromastoffe wiederum enthalten ist. Zur Lösung dieser Aufgabe besteht das erfindungsgemäße Verfahren im wesentlichen darin, daß das Einsatzprodukt, insbesondere Wein oder Bier, zunächst einer Destillation unter unteratmosphärischem Druck unterworfen wird, daß das Destillat einer Extraktion mit flüssigem oder überkritischem CO₂ unterworfen wird, worauf der Extrakt zur Abscheidung von Aroma teilweise entspannt und anschließend unter dem Restdruck dem Sumpfprodukt der Destillation in einem Sammelbehälter für das Endprodukt rückgeführt wird. Dadurch, daß das Verfahren mit einer Vakuumdestillation begonnen wird, wird eine Ethanolfraktion gewonnen, wobei bei entsprechend schonender Vakuumdestillation ein Großteil der schwerer flüchtigen Aromastoffe im Sumpfprodukt verbleibt. Das gewonnene Destillat enthält nun einen Großteil der leichter flüchtigen Aromastoffe und stellt im Vergleich zur ursprünglichen Menge des Einsatzproduktes nur einen Bruchteil dar, welcher üblicherweise unter 20 % der Menge des Ausgangsproduktes liegt. Für die Abtrennung der Aromastoffe aus einem derartigen Destillat ist somit nur ein wesentlich geringerer Massenstrom zu berücksichtigen, und dadurch, daß erfindungsgemäß das Destillat einer Extraktion mit überkritischem CO₂ unterworfen wird, läßt sich bei entsprechend selektiver Führung der Abscheidung des eingesetzten Destillats ein hohes Maß an Trennung zwischen Aromastoffen und Alkohol erzielen. Während bisher offensichtlich ein Vorurteil darin bestand, Aromastoffe aus einer Ethanolfraktion mit guten Ausbeuten rückzugewinnen, gelingt dies erfindungsgemäß dadurch, daß das Destillat nach der Extraktion mit flüssigem oder überkritischem CO₂ zur Ausgasung von CO₂ nur teilweise entspannt wird und anschließend unter dem Restdruck dem Sumpfprodukt der Destillation in einem gesonderten Sammelbehälter rückgeführt wird. Die Aromastoffe werden somit nicht, wie bei der üblichen Abscheidung der Aromastoffe aus dem CO₂-Extrakt, in getrennter flüssiger Form ausgetragen, sondern werden vielmehr unter einem CO₂ Restdruck in den Sammelbehälter ausgetragen. Die endgültige Entspannung auf atmosphärische Bedingungen erfolgt hiebei erst im Sammelbehälter für das Endprodukt, wobei das erfindungsgemäße Verfahren mit Vorteil so durchgeführt wird, daß die dem Endprodukt rückgeführten Aromastoffe in den Sammelbehälter für das Endprodukt durch Eindüsen entspannt werden. Bedingt durch diese Verlagerung der endgültigen Entspannung im Sammelbehälter, wurde überraschenderweise eine wesentlich bessere Ausbeute bei der Rückführung von Aromastoffen ohne Mehrbelastung durch Ethanol erzielt, so daß ein weitergehend von Ethanol gereinigtes Produkt mit einem hohen Aromastoffanteil erzielt werden kann.

Die Trennung von Aromastoffen aus dem Extrakt des Destillates kann noch dadurch verbessert werden, daß, wie es einer bevorzugten Ausführungsform des erfindungsgemäßen Verfahrens entspricht, bei der Abscheidung von Aroma nach der Extraktion das gasförmige Kopfprodukt des Abscheiders einem Wäscher zugeführt wird, wobei als Waschmedium flüssiges CO₂ verwendet wird und CO₂ gemeinsam mit den Aromastoffen aus dem Abscheider ausgetragen und dem Sammelbehälter unter Druck rückgeführt wird. Eine derartige Wäsche des bei der Abscheidung weitgehend abzutrennenden Aromas unter dem noch nicht vollständig entspannten Druck, insbesondere ein Waschen im Gegenstrom mit CO₂, führt hiebei dazu, daß im Abscheider eine bessere Durchmischung der Aromastoffe mit CO₂ erreicht und eine selektive Abtrennung der Aromastoffe ermöglicht wird, welche unter dem Restdruck in den Sammelbehälter für das Endprodukt eingedüst werden können. Dieses Eindüsen führt hiebei gleichzeitig zu einer Homogenisierung und besseren Verteilung der Aromastoffe im Endprodukt, so daß unmittelbar ein qualitativ hochwertiges und weitgehend konstante Eigenschaften aufweisendes Endprodukt erzielt werden kann. Die homogene Durchmischung unter dem Restdruck des CO₂ führt zwar zu einer leichten CO₂ Anreicherung des Endproduktes, welche jedoch in der Regel nicht als störend empfunden wird und die Haltbarkeit des Produktes steigert. Die Einschaltung eines CO₂ Wäschers bei der Abscheidung führt aber gleichzeitig dazu, daß das CO₂, welches für die neuerliche Extraktion im Kreislauf geführt werden soll, gereinigt wird und daß insgesamt auf Grund einer derartigen gleichzeitigen Reinigung des im Kreislauf zu führenden CO₂ gegenüber bekannten Verfahren geringere CO₂ Verluste entstehen. Das erfindungsgemäße Verfahren wird hiebei so durchgeführt, daß das Kopfprodukt des Abscheiders nach der Wäsche abgezogen und der Extraktion nach Kondensation und neuerlichem Aufbau der Extraktionsbedingungen rückgeführt wird.

Eine weitere Verbesserung der Qualität des Endproduktes läßt sich dadurch erzielen, daß das Sumpfprodukt während der Destillation über einen Fallfilmverdampfer im Kreislauf geführt wird, wobei in dem Fallfilmverdampfer gegebenenfalls schwerer flüchtige Aromastoffe verbleiben und auf diese Weise verhindert werden kann, daß diese Aromastoffe in das Destillat gelangen.

Eine besonders gute Trennung von Aromastoffen und Ethanol im Destillat läßt sich dadurch erzielen, daß die Entspannung im Abscheider auf 10 bis 60 bar, insbesondere 18 bis 25 bar, bei Temperaturen von -30°C bis +22°C, vorzugsweise -22°C bis -15°C, vorgenommen wird, wofür in der Regel eine zumindest geringfügige Erwärmung erforderlich ist. Da die Entspannung im Abscheider nicht auf atmosphärische Bedingungen sondern auf etwa 10 bis 60 bar erfolgt, ist die bei der Expansion entstehende Temperaturabnahme naturgemäß geringer, so daß an dieser Stelle nur wenig Wärme zugeführt werden muß, um die geforderten Temperaturen zu gewährleisten. Insbesondere wenn bei tiefen Temperaturen von -22°C bis -15°C gearbeitet wird, ist ein derartig hoher Restdruck wünschenswert um eine bessere Abtrennung der Aromastoffe vom dem Ethanol zu ermöglichen.

Insgesamt kann bei der erfindungsgemäßen Verfahrensführung in allen Stufen bei vergleichsweise niedrigen Temperaturen gearbeitet werden und erfindungsgemäß wird die Destillation vorzugsweise bei 20 bis 100 mbar, vorzugsweise 35 bis 50 mbar, und einer Sumpftemperatur von 20 bis 40°C, vorzugsweise 24°C bis 28°C, vorgenommen. Da auch bei der Aromaabscheidung der Wärmebedarf wesentlich geringer ist, da auch hier bei tieferen Temperaturen gearbeitet wird, kann der gesamte Heizkreislauf geringer dimensioniert werden und energetisch günstiger gestaltet werden.

Mit Vorteil wird die Extraktion der Aromastoffe aus dem Destillat bei einem Druck von 20 bis 250 bar, vorzugsweise 80 bis 100 bar, und einer Temperatur von -20°C bis +40°C, vorzugsweise 25°C bis 35°C, mit flüssigem oder überkritischem CO₂ vorgenommen, wobei auch hier vergleichsweise schonende Bedingungen und eine relativ niedrige Temperatur eingehalten werden kann.

Mit Rücksicht auf die Vorteile der Reinigung des im Kreislauf geführten CO₂ und die auf diese Weise geringen CO₂ Verluste, kann eine besonders einfache Kreislaufführung des CO₂ vorgesehen sein, wobei vorzugsweise das dem Abscheider nach der Wäsche abgezogene CO₂ kondensiert und bei einem Druck von 10 bis 60 bar, vorzugsweise 18 bis 25 bar, zwischengespeichert wird, wobei im Kreislauf zu ergänzendes CO₂ dem Zwischenspeicher zugeführt wird und aus diesem über eine Pumpe zur Erzielung der Betriebsbedingungen im Extraktor abgezogen wird und über den Sumpf des Extraktors eingepreßt wird.

Für die Extraktion der Aromastoffe aus dem Destillat haben sich Massenverhältnisse Alkohol : CO₂ von 0,2 : 1 bis 5 : 1 und insbesondere von etwa 3 : 1 als besonders vorteilhaft erwiesen.

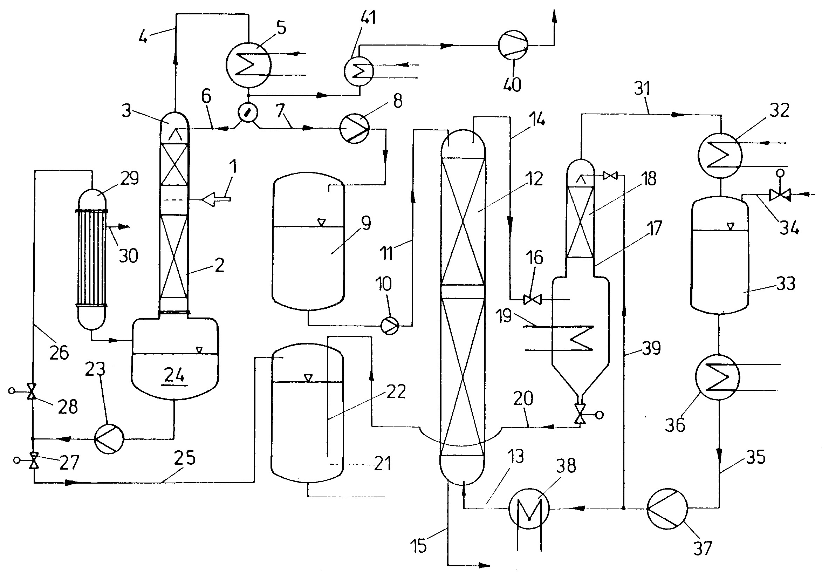

Das erfindungsgemäße Verfahren wird an Hand eines in der Zeichnung schematisch dargestellten Ausführungsbeispieles einer für die Durchführung des Verfahrens geeigneten Anlage näher erläutert.

Der Einsatzwein gelangt über eine Leitung 1 in eine Vakuumdestillationskolonne 2, an deren Kopf 3 das Destillat über eine Leitung 4 abgezogen wird. Dem Kopf 3 der Vakuumdestillationskolonne 2 wird hiebei ein etwa 60 bis 70 % Alkohol enthaltendes gasförmiges Alkohol-Wasser-Aromastoffegemisch abgezogen und diese Gasphase wird in einem Wärmetauscher 5 mit Kühlsohle kondensiert und kann zur Verbesserung der Trennung zumindest teilweise über eine Leitung 6 dem Kopf 3 der Vakuumdestillationskolonne 2 wiederum rückgeführt werden. Das Destillat wird über eine Leitung 7 abgezogen und gelangt über eine Pumpe 8 in einen Sammelbehälter 9 für das Alkohol-Wasser-Aromastoffegemisch.

Aus dem Sammelbehälter 9 wird das Destillat über eine Pumpe 10 und eine Leitung 11 in einen Extraktor 12 übergeführt, welchem CO₂ unter überkritischen Bedingungen über eine Leitung 13 im Gegenstrom zugeführt wird. Am Kopf des Extraktors 12 wird der Extrakt über eine Leitung 14 abgezogen, wohingegen aus dem Sumpf des Extraktors 12 über eine Leitung 15 ein Alkohol-Wasser-Gemisch abgezogen werden kann.

Der über die Leitung 14 abgezogene Extrakt gelangt über eine Drossel 16 in einen Abscheider 17, in dessen Kopf ein Wäscher 18 untergebracht ist. Im Abscheider 17 ist ein Wärmetauscher 19 vorgesehen, um die bei der teilweisen Expansion eintretende Temperaturabsenkung teilweise zu kompensieren. Insgesamt wird jedoch im Abscheider 17 bei gegenüber den Temperaturen im Sammelbehälter 9 wesentlich geringeren Temperaturen gearbeitet, so daß die zur Kompensation erforderliche einzubringende Wärmemenge gering gehalten werden kann. Die Wäsche im Wäscher 18 erfolgt bevorzugt mit einer Teilmenge des im Kreislauf geführten bereits gereinigten CO₂, wobei unter den gegebenen Bedingungen Aromastoffe in hoher Ausbeute aus dem CO₂ ausgeschieden werden und mit dem verbleibenden Restdruck im Abscheider 17 über eine Leitung 20 einem Sammelbehälter 21 für das Endprodukt über eine Tauchlanze 22 eingedüst werden können.

Dem Sammelbehälter 21 für das Endprodukt wird über eine Pumpe 23 jeweils Sumpfprodukt 24 aus der Destillationskolonne 2 zugeführt, wobei hiefür eine Leitung 25 vorgesehen ist. An die Leitung 25 mündet eine weitere Zweigleitung 26 über welche bei geschlossenem Ventil 27 und geöffnetem Ventil 28 das Sumpfprodukt im Kreislauf geführt werden kann. In diesem Kreislauf ist ein Fallfilmverdampfer 29 eingeschaltet.

Das aus dem Abscheider über eine Leitung 31 abgezogene bereits gereinigte CO₂ wird zunächst über einen Wärmetauscher 32 geführt und kondensiert und gelangt anschließend in den Sammelbehälter 33, welchem über eine Leitung 34 jeweils frisches CO₂ zur Ergänzung der Verluste zugeführt werden kann.

Aus dem Sammelbehälter 33 für gereinigtes CO₂ wird die benötigte CO₂ Menge für die Extraktion und die Wäsche des CO₂ im Abscheider 17 über eine Leitung 35 abgezogen, in welche Wärmetauscher 36, eine Pumpe bzw. einen Verdichter 37 und ein weiterer Wärmetauscher 38 eingeschaltet sind. Die Extraktionsbedingungen werden hiebei erst durch den Wärmetauscher 38 eingestellt, so daß vor dem Wärmetauscher 38 über eine Zweigleitung 39 der dem Wäscher 18 zuzuführende Anteil des CO₂ in gasförmigem Zustand abgezogen werden kann.

Das Vakuum für die Vakuumdestillationskolonne wird über eine Pumpe 40 erzeugt, wobei die Saugleitung ein Wärmetauscher 41 zur Kondensation von flüchtigen Anteilen eingeschaltet ist.

## Patentansprüche

1. Verfahren zum Vermindern des Alkoholgehaltes alkoholischer Getränke, bei welchem Aromastoffe mit flüssigem oder überkritischem CO₂ extrahiert werden, Alkohol destillativ abgetrennt wird und die extrahierten Aromastoffe dem Getränk mit vermindertem Alkoholgehalt zumindest teilweise wieder rückgeführt werden, dadurch gekennzeichnet, daß das Einsatzprodukt, insbesondere Wein oder Bier, zunächst einer Destillation unter unteratmosphärischem Druck unterworfen wird, daß das Destillat einer Extraktion mit flüssigem oder überkritischem CO₂ unterworfen wird, worauf der Extrakt zur Abscheidung von Aroma teilweise entspannt und anschließend unter dem Restdruck dem Sumpfprodukt (24) der Destillation in einem Sammelbehälter (21) für das Endprodukt rückgeführt wird.

2. Verfahren nach Anspruch 1, dadurch gekennzeichnet, daß die dem Endprodukt rückgeführten Aromastoffe in den Sammelbehälter (21) für das Endprodukt durch Eindüsen entspannt werden.

3. Verfahren nach Anspruch 1 oder 2, dadurch gekennzeichnet, daß bei der Abscheidung von Aroma nach der Extraktion das gasförmige Kopfprodukt des Abscheiders (17) einem Wäscher zugeführt wird, wobei als Waschmedium flüssiges CO₂ verwendet wird und CO₂ gemeinsam mit den Aromstoffen aus dem Abscheider (17) ausgetragen und dem Sammelbehälter (21) unter Druck rückgeführt wird.

4. Verfahren nach Anspruch 1, 2 oder 3, dadurch gekennzeichnet, daß das Kopfprodukt des Abscheiders (17) nach der Wäsche abgezogen und der Extraktion nach Kondensation und neuerlichem Aufbau der Extraktionsbedingungen rückgeführt wird.

5. Verfahren nach einem der Ansprüche 1 bis 4, dadurch gekennzeichnet, daß das Sumpfprodukt (24) während der Destillation über einen Fallfilmverdampfer (29) im Kreislauf geführt wird.

6. Verfahren nach einem der Ansprüche 1 bis 5, dadurch gekennzeichnet, daß die Entspannung im Abscheider (17) auf 10 bis 60 bar, insbesondere 18 bis 25 bar, bei Temperaturen von -30°C bis +22°C, vorzugsweise -22°C bis -15°C, vorgenommen wird.

7. Verfahren nach einem der Ansprüche 1 bis 6, dadurch gekennzeichnet, daß die Destillation bei 20 bis 100 mbar, vorzugsweise 35 bis 50 mbar, und einer Sumpftemperatur von 20 bis 40°C, vorzugsweise 24°C bis 28°C, vorgenommen wird.

8. Verfahren nach einem der Ansprüche 1 bis 7, dadurch gekennzeichnet, daß die Extraktion der Aromastoffe aus dem Destillat bei einem Druck von 20 bis 250 bar, vorzugsweise 80 bis 100 bar, und einer Temperatur von -20°C bis +40°C, vorzugsweise 25°C bis 35°C, mit flüssigem oder überkritischem CO₂ vorgenommen wird.

9. Verfahren nach einem der Ansprüche 1 bis 8, dadurch gekennzeichnet, daß das dem Abscheider (17) nach der Wäsche abgezogene CO₂ kondensiert und bei einem Druck von 10 bis 60 bar, vorzugsweise 18 bis 25 bar, zwischengespeichert wird, wobei im Kreislauf zu ergänzendes CO₂ dem Zwischenspeicher (33) zugeführt wird und aus diesem über eine Pumpe zur Erzielung der Betriebsbedingungen im Extraktor (12) abgezogen wird und über den Sumpf des Extraktors (12) eingepreßt wird.

10. Verfahren nach einem der Ansprüche 1 bis 9, dadurch gekennzeichnet, daß bei der Extraktion der Aromastoffe aus dem Destillat ein Massenverhältnis Alkohol : CO₂ von 0,2 : 1 bis 5 : 1 vorzugsweise etwa 3 : 1, eingestellt wird.

## Claims

1. Process to lower the alcohol content of alcoholic beverages, wherein flavours are extracted with liquid or supercritical CO₂, alcohol is distilled off and the extracted flavours are at least partially recycled to the beverage with a reduced alcohol content, characterized in that the starting material, especially beer or wine, is first distilled at subatmospheric pressure, that the distillate is extracted with liquid or supercritical CO₂, whereupon the extract is at least partially expanded for seperating flavours and is afterwards recycled under the residual pressure to the bottom product (24) of the distillation in a collecting vessel (21) for the final product.

2. Process according to claim 1, characterized in that the flavours being recycled to the final products in the collecting vessel (21) for the final product are expanded by injecting.

3. Process according to claim 1 or 2, characterized in that after the extraction at the separation of flavours the gaseous overhead product of the seperator (17) is supplied to a washer, whereby liquid CO₂ is used as washing medium and C02 is withdrawn from the separator (17) together with the flavours and is recycled under pressure to the collection vessel (21).

4. Process according to claim 1, 2 or 3, characterized in that the overhead product of the seperator (17) is drawn off after the washing and is recycled to the extraction after condensation and setting up again of the extraction conditions.

5. Process according to any of the claims 1 to 4, characterized in that the bottom product (24) is recycled during the distillation over a gravity feed film evaporator (29).

6. Process according to any of the claims 1 to 5, characterized in that the expansion in the separator (17) to 15 to 60 bar, especially 18 to 25 bar, is undertaken at temperatures of -30°C to +22°C, especially -22°C to -15°C.

7. Process according to any of the claims 1 to 6, characterized in that the distillation is undertaken at 20 to 100 mbar, especially 35 to 50 mbar, and a bottom temperature of 20 to 40°C, especially 24°C to 28°C.

8. Process according to any of the claims 1 to 7, characterized in that the extraction of the flavours from the distillate is undertaken with liquid or supercritical CO₂ at a pressure of 20 to 250 bar, especially 80 to 100 bar, and at a temperature of -20°C to +40°C, especially 25°C to 35°C.

9. Process according to any of the claims 1 to 8, characterized in that the CO₂ drawn off from the separator (17) after the washing is condensed and temporarily stored at a pressure of 10 to 60 bar, especially 18 to 25 bar, whereby CO₂, which is to be replenished in the cycle, is fed to the temporary storage (33) and therefrom drawn off over a pump for receiving the working conditions in the extractor (12) and is pressed in over the bottom of the extractor (12).

10. Process according to any of the claims 1 to 9, characterized in that during the extraction of the flavours from the distillate a proportion by mass of alcohol to CO₂ of 0,2 : 1 to 5 : 1, especially about 3 : 1, is adjusted.

## Revendications

1. Procédé pour diminuer la teneur en alcool de boissons alcooliques, dans lequel on extrait des arômes avec du CO₂ liquide ou surcritique, on sépare l'alcool par distillation et on réintroduit au moins en partie les arômes exrtaits dans la boisson à teneur en alcool réduite, caractérisé en ce que le produit de charge, en particulier le vin ou la bière, est soumis tout d'abord à une distillation à une pression inférieure à la pression atmosphérique, en ce que le distillat est soumis à une extraction avec du CO₂ liquide ou surcritique, après quoi l'extrait est partiellement détendu aux fins de séparation de l'arôme, puis réintroduit sous la pression résiduelle dans le produit pâteux (24) de la distillation dans un récipient de collecte (21) pour le produit final.

2. Procédé selon la revendication 1, caractérisé en ce que les arômes réintroduits dans le produit final dans le récipient de collecte (21) pour le produit final sont détendus par passage à travers une buse.

3. Procédé selon la revendication 1 ou 2, caractérisé en ce que lors de la séparation de l'arôme après extraction le produit de tête gazeux du 6éparateur (17) est introduit dans un appareil de lavage, opération dans laquelle on utilise comme milieu de lavage du CO₂ liquide et on tire le CO₂ en même temps que les arômes du séparateur (17) et on le réintroduit dans le récipient de collecte (21) sous pression.

4. Procédé selon la revendication 1, 2 ou 3, caractérisé en ce qu'on extrait le produit de tête du séparateur (17) après le lavage et en ce qu'on le réintroduit dans l'extraction après condensation et reconstitution des conditions d'extraction .

5. Procédé selon l'une des revendications 1 à 4, caractérisé en ce que le produit pâteux (24) est introduit dans le cycle au cours de la distillation par l'intermédiaire d'un évaporateur à couche mince (29).

6. Procédé selon l'une des revendications 1 à 5, caractérisé en ce que la détente dans le séparateur (17) se fait à 10 à 60 bars, en particulier à 18 à 25 bars, à des températures de -30°C à +22°C, de préférence de -22°C à -15°C.

7. Procédé selon l'une des revendications 1 à 6, caractérisé en ce qu'on conduit la distillation à 20 à 100 mbars, de préférence à 35 à 50 mbars, et à une température de fond de 20 à 40°C, de préférence de 24°C à 28°C.

8. Procédé selon l'une des revendications 1 à 7, caractérisé en ce qu'on procede à l'extraction des arômes à partir du distillat à une pression de 20 à 250 bars, de préférence de 80 à 100 bars, et à une température de -20°C à +40°C, de préférence de 25°C à 35°C, avec du CO₂ liquide ou surcritique.

9. Procédé selon l'une des revendications 1 à 8, caractérisé en ce que le CO₂ retiré du séparateur (17) après lavage est condensé et emmagasiné de façon intermédiaire à une pression de 10 à 60 bars, de préférence de 18 à 25 bars, le CO₂ à apporter comme complément dans le cycle étant introduit dans le dispositif d'emmagasinage intermédiaire (33) et prélevé dans celui-ci par l'intermédiaire d'une pompe pour obtenir les conditions de fonctionnement dans l'extracteur (12), puis introduit par compression par l'intermédiaire du bassin de décantation de l'extracteur (12).

10. Procédé selon l'une des revendications 1 à 9, caractérisé en ce que lors de l'extraction des arômes du distillat on établit un rapport massique alcool:CO₂ de 0,2 : 1 à 5 : 1 , de préférence d'environ 3 : 1.
